# EUROPEAN PATENT SPECIFICATION

(11) **EP 1 875 801 B1**
(45) Date of publication and mention of the grant of the patent: **09.06.2010**
(21) Application number: 06743436.5
(22) Date of filing: 12.04.2006
(51) Int. Cl.: A01K 61/00

(54) **ARTIFICIAL COASTAL BUILDING ELEMENT FOR THE REGENERATION, RECOVERY AND REHABILITATION OF MARINE HABITATS**
KÜNSTLICHES KÜSTENBAUELEMENT FÜR DIE REGENERIERUNG, ERNEUERUNG UND REHABILITIERUNG VON MEERESLEBENSRÄUMEN
PIECE ARTIFICIELLE DE PRODUCTION LITTORALE POUR LA REGENERATION, LA RECUPERATION ET LA REHABILITATION DES HABITATS MARINS

(30) Priority: 15.04.2005 ES 200500902
(43) Date of publication of application: 09.01.2008
(73) Proprietor: Guer Ingenieria, S.L., 38208 San Cristobal de La Laguna Tenerife (ES)
(72) Inventor: Santana Rios, Luis Victoriano, E-38208 San Cristobal De La Laguna Santa Cruz De Tenerife (ES)
(74) Representative: Ungria Lopez, Javier
(86) International application number: PCT/ES2006/000177
(87) International publication number: WO 2006/108898

(56) References cited:
- JP-A- 05 346 011
- US-A- 4 993 362
- GROVE R.S. ET AL.: 'Fishing reef planning in Japan' ARTIFICIAL REEFS; MARINE AND FRESHWATER APPLICATIONS. LEWIS PUBL. INC. 1985, pages 185 - 251, XP008090651
- JENSEN ET AL.: 'Artificial reefs in European seas', 2000, KLUVER ACADEMIC PUBLISHER article ALLEMAND D. ET AL.: 'Artificial reefs in the principality of Monaco: Protection and enhancement of coastal zones', XP008090652

## Description

### OBJECT OF THE INVENTION

As stated in the title of this descriptive specification, the present invention relates to an artificial coastal building element for the regeneration, recovery and rehabilitation of marine habitats, and has been designed to provide shelter for both fry and adult fish, influence currents and control the marine dynamics of the surrounding area by attracting a large number of the small organisms that sustain various marine species and thereby increasing the productivity of nearby fisheries. it will be installed at depths of 15-25 metres in places that might be degraded. It will offer a substrate for numerous marine species, maintaining, recovering and increasing the biodiversity of areas along the coast that have become damaged, whether it be due to human action or to natural disasters.

One way to increase natural resources is to create artificial reefs, which will in the future form part of the local ecosystem, providing areas of shelter, food and attachment for both animal and plant species, making this strategy into one of the most efficient for conservation of biodiversity. The installation of structures forming artificial reefs implies a benefit both for the marine ecosystems and for fishing resources, since studies conducted previously have provided data on an increase in biomass and consequently in biodiversity.

The restoration and rehabilitation of ecosystems that is proposed with these structures acts as an escape route for the recovery of certain deteriorated areas, providing many additional advantages:
- It provides shelter, both for fry and for adults.
- It influences currents and modulates the marine dynamics of the surrounding area. Artificial reefs parallel to the coast will act as a means of mitigating swells in order to prevent migration of beach sand, whether native or placed by means of artificial fills.
- It attracts a large number of small organisms which serve to sustain different marine species, implying a recovery for the ecosystems existing in the area.
- It implies a fattening area for fish, whether local or migratory.
- It develops aquiculture since it helps in the maintenance of fisheries.

### PRIOR ART OF THE INVENTION

In the creation of new artificial reefs, there are several premises that have to be borne in mind, and which are going to be important for the future colonisation of the structure to be installed. The most important is all these is the use of materials that do not affect the environment.

Some examples can be seen in the structures created by the Reef Ball group. These structures do not need to be anchored since their design permits them to withstand the force of the waves. Artificial reefs with Reef Balls achieve spectacular productivities in terms of biomass development. For example, on average, each one of the Reef Ball elements produces around 180 kg of biomass (animal or plant) each year. The size, shape and weight of the structure have to be studied for each of the areas where it is to be sunk, since the state of the sea is going to be crucial for its resistance. Reef Ball design elements have been successfully installed in countries such as Australia, United States, Philippines, Malaysia, Dominican Republic, Curacao, Baltic Sea, Switzerland, Spain, Mexico, the Turks and Caicos Islands, the Maldives, etc.

The majority of them have been built by small-scale fishermen in order to maintain the fish populations in the fishing areas, using very simple materials for this such as trees, tyres, stones, etc.

In countries such as Japan, where fishing represents a major contribution to the economy and a nutritional balance for the population, programmes have been developed where highly specialised technology is used for the building of artificial reefs (Sheehy, 1979). The Japanese are world leaders in artificial reef technology for the benefit of commercial fishing, and they have used materials such as concrete, steel and reinforced plastic.

According to Sheehy and Vik, 1983, the majority of artificial reefs are built in order to promote sports fishing, as occurs in the United States. Japan and the US are the only countries with a national development plan for artificial reefs.

In various countries such as the Philippines or the United States, oil companies are financing ambitious projects on artificial reefs in order to repopulate shoals of fish in areas affected by industrial activity.

Malaysia and the Philippines have been using discarded tyres as well as installing 1600 bamboo modules in the form of pyramids in recent years.

Australia has, like other countries, also been using exploitable materials for leisure use for sports fishing and diving.

Mexico has started to become a pioneer in this field using discarded materials and designs for new reefs with concrete materials.

Taiwan has opted for sinking several ships close to its coastline in order to create these artificial reefs.

In Europe, thanks to scientific research, a large number of artificial reefs have been created along the Mediterranean coast since 1960. These exists a network of research into artificial reefs in order to set up a coordinated management of them within the European Union.

There currently exists an international movement against exploitable artificial reefs based on rejected equipment such as tyres, old vehicles, ships, planes, etc. Most of these are not designed to last for long in the harsh marine conditions of corrosion, currents, swells, etc. In the short term these elements become transformed into something that is more harmful than beneficial to the environment and to humans, whereas by using controlled materials they will become are converted into structures that are more durable, stable, functional and safe.

The document JP5346011 reflects the preamble of claim 1. Taking into account this document, the present invention introduces some improvements in the design, composition and arrangement of the structure in order to facilitate the colonisation by different bentonic organisms.

### DESCRIPTION OF THE INVENTION

The planning of the structures to use in artificial reefs is the most important point of the entire installation process, since their design, composition, arrangement and strategy are the overriding characteristics to bear in mind for the future restoration of the ecosystems reigning in the areas under study.

In their design, irregular surfaces with different hollows have been considered. The presence of different textures on the surface of the reef is important for facilitating colonisation by different bentonic organisms, along with numerous hollows that will offer shelter to fish fauna and spawning areas for some species. These hollows imply an advantage for colonising species because they act not just as areas for attachment but also for feeding, shelter and reproduction.

For their composition in the construction; the pH of the concrete to use has to be very similar to that of the seawater in order to facilitate the settlement of marine organisms. It has to be prepared with non-toxic additives, so that no alteration takes place in the environment.

For their arrangement; the concrete structures that are going to form the future artificial reefs have to be sunk at a depth of around 15 or 25 metres in order to be able to observe the evolution of the settled colonies by means of autonomous diving. They will be able to be sunk in areas where the seabed has very little biodiversity, as in sandy substrates, or in areas which by themselves already form small reefs such as rocky areas. It is important that they can be visited by sports divers on a tourist basis, providing a recreational attraction that will serve for their economic maintenance and avoiding illegal fishing in the area of the reef.

For their strategy; these artificial reefs will be produced with protective structures made of iron that project from the artificial reefs in order to keep fishing nets away. The best way to do this is to place iron bars in the form of cross where the nets will become enmeshed.

This area must be kept free of any fishing activity until species have become fully settled in the new reef.

Once the new reefs have been created, it is important to conduct periodical (monthly) observations, in both the short term and the long term following their installation, in order to check on the evolution of the existing communities and new population that arise.

Taking account of the above, the artificial coastal building element for the regeneration, recovery and rehabilitation of marine habitats, forming the object of the invention, as defined in claim 1, has a general prismatic shape with a polygonal base, advantageously with six sides. In its structure, a solid lower portion or slab can be distinguished for resting on the floor or seabed, with a series of cylindrical columns distributed in the angular and central portions, and an upper portion materialised in the form of a slab of the same shape but with slightly smaller dimensions and provided with triangular apertures due to being defined by a central core from which six radial arms extend which are attached to a peripheral arc with a hexagonal outline.

This "Production Habitats Block" module is differentiated from the "Protection Habitats Blocks" by its larger dimensions and its functioning structure and it does not have to withstand powerful movements produced by the marine hydrodynamics. They act more as an attraction for pelagic and bentonic species as production areas rather than being for protection.

In principle, it is important for the location area to be away from urban settlements so that a study of the real evolution of the artificial system that has been created can be carried out without the intervention of the hand of man, away from shipping lanes, without any fishing activity, one which will not alter the existing currents and where the seabed is sand with a low biodiversity. A longitudinal surface running along the coast and with a extent of 50 metres will be considered to be sufficient for initial evaluations, and the shapes of those reefs will be able to be varied in this same area, observing the suitability of each one of the different structures. The depth of the installation would be at less than 25 metres so that it can be monitored by divers and use will be made of an area with large continental platform so that it is not too close to the coast and thereby avoid any intrusion in the structures.

Both the structure and the location area must initially be very well protected, since the first settlements are crucial for the viability of the reef. The aim of the artificial reefs is to repopulate shoals of fish in areas of over-fishing and the bentonic communities of the seabed.

The concrete that is used in the building of a reef has to have the characteristics of durability and strength that are necessary for a proper installation. Knowing that seawater has a pH of between 7.5-8.4, we have to obtain a concrete with a pH that is much more basic than that currently obtained for concrete structures used in ports, dikes and breakwaters, with a pH of 12, which therefore has to be carbonated or introduced into injection chambers in order to eliminate CO2 and reduce the pH. It is also possible to use special additives such as micro silica in order to lower the pH.

Seawater is characterised by possessing a large amount of salts such as sodium chloride, magnesium sulphate, magnesium chloride, calcium sulphate, calcium chloride, potassium sulphate, potassium chloride and sodium bicarbonate, which are the main causes of the degradation of concrete over the years. Corrosion is also a problem in that it affects concrete, and can be produced in part by reducer bacteria of sulphates present in the seawater. Knowing the negative effects produced by seawater on concrete, when it comes to creating a structure we have to take account of the fact that this structure has to be durable over time and must not contaminate the environment.

Using a much more porous concrete for the structure will facilitate the settlement of various species. Porosity and roughness are determined by the water/cement ratio, which needs to be increased as much as possible. Washing with water under pressure will create all kinds of textures that will allow the different species to find their suitable niche.

In order to facilitate an understanding of the characteristics of the invention and forming an integral part of this specification, some sheets of plans are attached whose figures, on an illustrative but in no way limiting basis, represent the following:

### BRIEF DESCRIPTION OF THE DRAWINGS

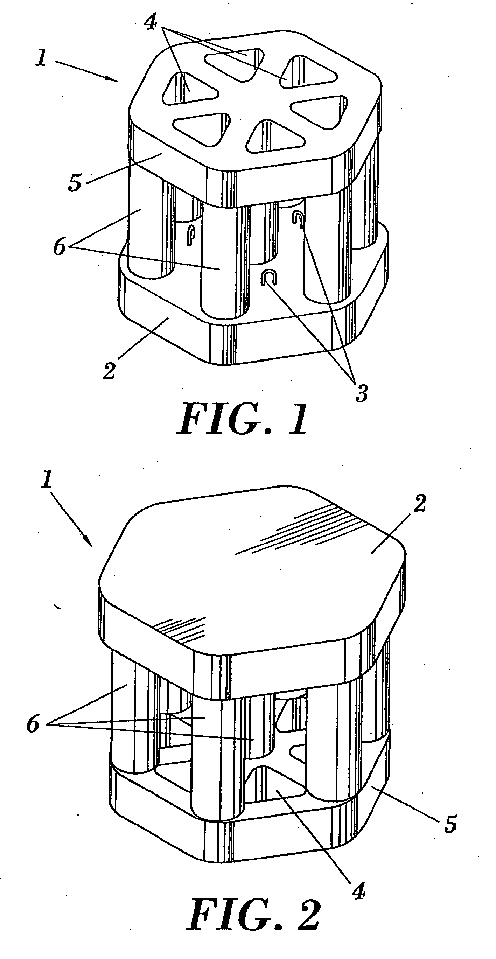

**Figure 1****.-** Is a perspective view of the artificial coastal building element for the regeneration, recovery and rehabilitation of marine habitats, forming the object of the invention.
**Figure 2****.-** Is a perspective view of the same element as that of figure 1, from its lower face.

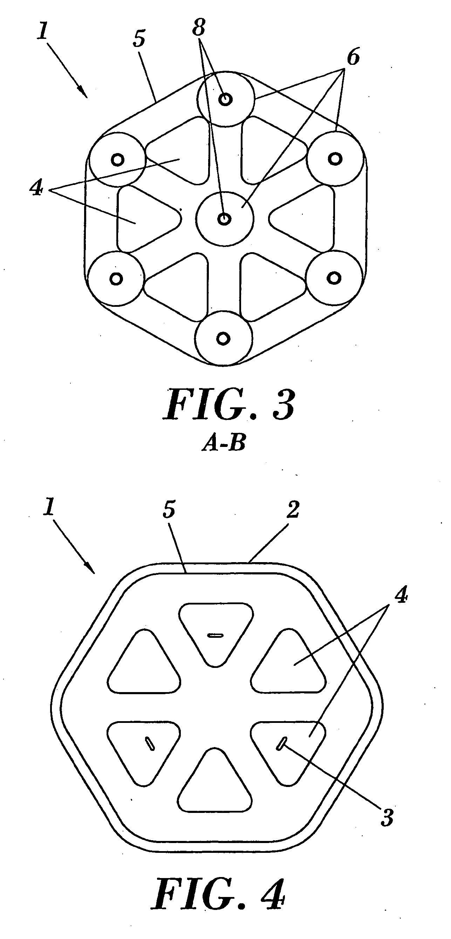

**Figure 3****.-** Is a section along the line of cut A-B of figure 5.
**Figure 4****.-** Is a plan view of that shown in figure 1.
**Figure 5****.-** Is an elevation view of that shown in figure 1.
**Figure 6****.-** Is a plan view of the upper slab of the artificial element, including the rodding of the reinforced concrete constituting its material.
**Figure 7****.-** Is an exploded partial view in elevation of the coupling of the two slabs to the columns.
**Figure 8****.-** Is an enlarged detailed of the coupling of the upper slab to one of the columns.
**Figure 9****.-** Is a perspective view of a series of elements equal to the previous ones, arranged to form a reef.

### DESCRIPTION OF THE PREFERRED FORM OF EMBODIMENT

Making reference to the numbering adopted in the figures, we can see how the artificial coastal building element for the regeneration, recovery and rehabilitation of marine habitats, which the invention proposes, is referenced in general with the number **1** and is constructed with solid portions and rounded edges which withstand the harsh marine environment. As we have said earlier, these structures are designed for areas with depths varying between 15 and 25 metres. Their volume is contained within a regular hexagonal prism of variable size and which maintains the ratio between the sides.

Altogether, the element **1** has a total external height of 1.32, a width at its support base of 1.52 and 1.42 m for the upper closing slab.
Three portions are differentiated in its structure:

The lower portion consists of a prismatic hexagonal slab **2** of apothem 0.70 m. The vertices of this slab are rounded. The thickness of the portion is 0.26 m.

This slab **2** is provided with anchorages **3** embedded in it and emerging in the form of a "U". They serve to handle and transport the element and will later on be lost. There are three anchorages with a steel rod of cross-section 0.012 m and they are distributed symmetrically with respect to the geometric centre and half the apothem of the hexagon, their location in the longitudinal direction coinciding with the apertures **4** of the upper slab **5.**

The upper slab **5** has a prismatic hexagonal shape the same as the lower slab **2** and its vertices are also rounded, though its apothem is less than the lower one, measuring 0.65 m. The thickness of the upper slab is 0.26 m in this form of embodiment.

It is provided with holes or apertures **4** with an equilateral triangular shape with rounded vertices and height 0.30 m, being distributed in the interior of the sections formed between the diagonals of the hexagon.

Tracing the diagonals of the hexagon with a width of 0.15 m, the apertures **4** are distributed in the sectors between them and are in turn separated from the end of the element by 0.15 m.

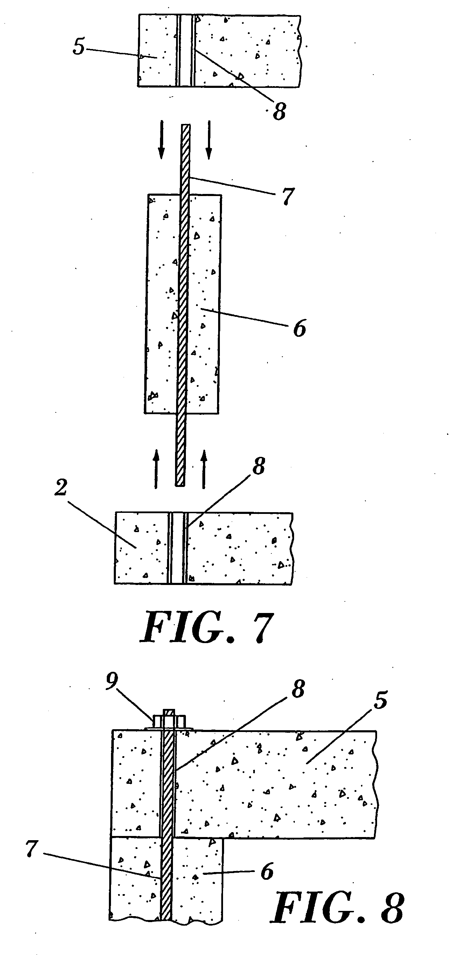

The central part of the artificial element **1** constitutes the union nexus between the lower slab **2** and the upper one **5,** and is defined by cylindrical portions **6** of length 0.80 m and diameter 0.26 m. These portions are distributed coinciding with the vertices of the hexagon and at a distance between the axis of the cylinder **6** and the end of the vertex of the upper slab **5** of 0.13 m, in such a way that six cylindrical portions are located plus a seventh **6** coinciding with the exact centre of the hexagon. These cylinders **6** of the central part of the element **1** serve as assembly elements between the two upper **5** and lower **2** slabs by means of a threaded rod **7** embedded in them in the longitudinal direction and passing through the two hexagonal slabs **2** and **5** as seen in figures 7 and 8. This rod **7** traverses the slabs **2** and **5** via tubes **8** of diameter 0.040 m which have previously been embedded in the slabs **2** and **5** and which coincide with the already defined location of the axes of the cylinders **6.** The threaded rod **7** longitudinally traverses the thickness of the slabs **2** and **5** in order to secured by means of a washer and nut **9** at both ends.

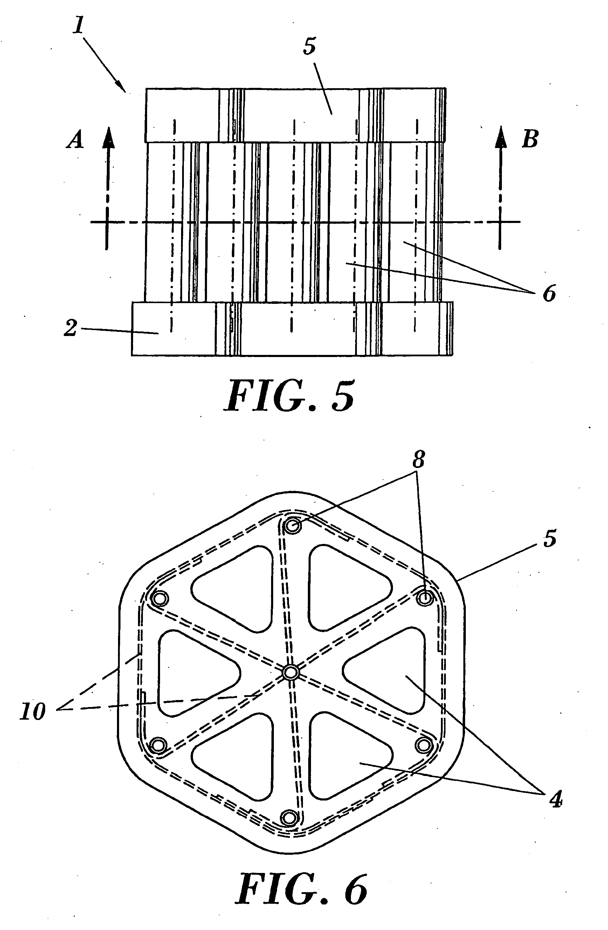

In figure 6, the reinforcing rods **10** of the concrete are distinguished.

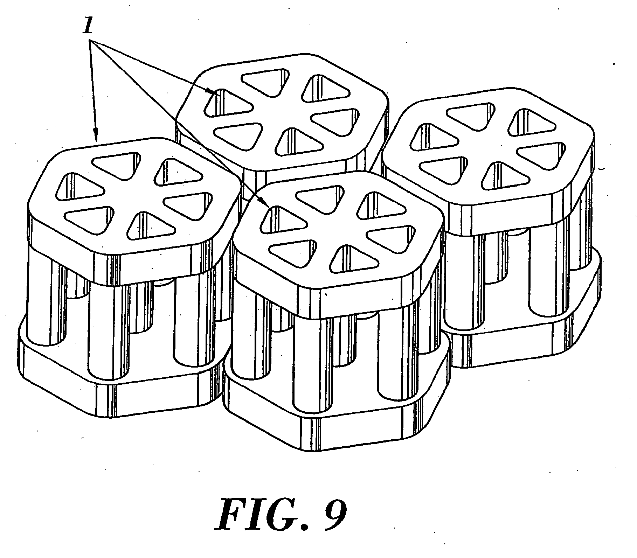

Figure 9 shows the backed arrangement of several elements **1** forming a reef of the characteristics that are advocated. It can be seen that the different elements **1** are grouped with the lower slabs **2** or support slabs for the floor being backed on to each other and with the upper slabs **5** slightly separated from each other due to their smaller dimension. Restricted access passages to the central portion of the columns are formed, which can also be accessed from the side and via the triangular apertures **4** of the upper slabs **5.**

## Claims

1. **ARTIFICIAL COASTAL BUILDING ELEMENT FOR THE REGENERATION, RECOVERY AND REHABILITATION OF MARINE HABITATS,**comprising three well-differentiated portions: a lower slab (2); an upper slab **(5),** and an intermediate portion defined by cylindrical columns **(6)** distributed joining the slabs **(2, 5)** as a union nexus between them; **characterised in that**
the lower slab **(2)** consists in a solid lower portion **(2)** for resting on the floor, having a prismatic hexagonal shape;
the upper slab **(5)** has the same prismatic hexagonal shape but of smaller apothem and with angles rounded, with passing apertures **(4)** of triangular outline and rounded angles, which are located between respective radii materialising radial ribs which join the centre with the vertices;
the columns **(6)** are distributed joining the vertices and central points of the slabs **(2, 5)** as a union nexus between them, the array being locked together by means of separate threaded rods **(7)** embedded in the concrete material of the columns **(6),** in the axial direction and whose emerging ends pass through holes provided in the vertices and central point of the hexagonal slabs **(2, 5)** with the location of end washers and nuts **(9);**
the slabs **(2, 5)** and columns **(6)** are made of concrete with a pH very similar to that of the seawater, having a pH of between 7.5-8.4, and being obtainable by a process selected from the group consisting of being carbonated, or being introduced into injection chambers in order to eliminate CO2, or using special additives such as micro silica;
the concrete material of the upper slab **(5)** and the columns **(6)** has a rough texture.

2. **ARTIFICIAL COASTAL BUILDING ELEMENT FOR THE REGENERATION, RECOVERY AND REHABILITATION OF MARINE HABITATS,** according to claim 1, **characterised in that** the lower slab **(2)** has means of anchorage **(3)** for hoisting and transport, materialised by arcs or bridges of steel rod whose folded ends are embedded in the concrete material of the slab (2).

3. **ARTIFICIAL COASTAL BUILDING ELEMENT FOR THE REGENERATION, RECOVERY AND REHABILITATION OF MARINE HABITATS,** according to claim 1, **characterised in that** the upper slab **(5)** and columns (6) have the rough texture while the lower slab (2) is smooth.

4. **ARTIFICIAL COASTAL BUILDING ELEMENT FOR THE REGENERATION, RECOVERY AND REHABILITATION OF MARINE HABITATS,** according to claim 1, **characterised in that** the passage holes for the threaded rods **(7),** provided in the slabs **(2, 5),** are tubular portions **(8)** of PVC embedded in the concrete.

## Patentansprüche

1. Künstliches Küstenbauelement für die Regenerierung, Wiederherstellung und Sanierung von Meereslebensräumen, das drei gut differenzierte Abschnitte umfasst: eine untere Platte (2), eine obere Platte (5) und einen Zwischenabschnitt, der durch zylindrische Säulen (6) definiert wird, die so verteilt sind, dass sie die Platten (2, 5) als ein Verbindungsglied zwischen denselben verbinden, **dadurch gekennzeichnet, dass:**
die untere Platte (2) aus einem massiven unteren Abschnitt (2) zum Aufliegen auf dem Boden besteht und eine prismatische sechseckige Form hat,
die obere Platte (5) die gleiche prismatische sechseckige Form hat, aber mit einer kleineren Mittelsenkrechten und abgerundeten Winkeln, mit hindurchgehenden Öffnungen (4) mit einem dreieckigen Umriss und abgerundeten Winkeln, die zwischen den jeweiligen Radien angeordnet sind, die radiale Rippen verwirklichen, die den Mittelpunkt mit den Scheitelpunkten verbinden,
die Säulen (6) so verteilt sind, dass sie die Scheitelpunkte und die Mittelpunkte der Platten (2, 5) als Verbindungsglied zwischen denselben verbinden, wobei die Gruppierung mit Hilfe von gesonderten Gewindestangen (7), die in der axialen Richtung in dem Betonmaterial der Säulen (6) eingebettet sind und deren austretende Enden durch Löcher hindurchgehen, die in den Scheitelpunkten und dem Mittelpunkt der sechseckigen Platten (2, 5) vorgesehen sind, mit der Anordnung von Endscheiben und Muttern (9) zusammmengeschlossen ist"
die Platten (2, 5) und die Säulen (6) aus Beton mit einem pH hergestellt sind, der dem des Meerwassers sehr ähnelt, mit einem pH von 7,5-8,4, und durch ein Verfahren erzielbar sind, ausgewählt aus der Gruppe, die daraus besteht, dass sie karbonatisiert werden oder in Injektionskammern eingebracht werden, um das CO₂ zu beseitigen, oder besondere Zuschlagstoffe, wie beispielsweise Mikrosilika, verwendet werden,
das Betonmaterial der oberen Platte (5) und der Säulen (6) eine raue Textur hat.

2. Künstliches Küstenbauelement für die Regenerierung, Wiederherstellung und Sanierung von Meereslebensräumen nach Anspruch 1, **dadurch gekennzeichnet, dass** die untere Platte (2) Verankerungsmittel (3) zum Heben und Befördern hat, verwirklicht durch Bögen oder Brücken aus Stangenstahl, deren umgelegte Enden in dem Betonmaterial der Platte (2) eingebettet sind.

3. Künstliches Küstenbauelement für die Regenerierung, Wiederherstellung und Sanierung von Meereslebensräumen nach Anspruch 1, **dadurch gekennzeichnet, dass** die obere Platte (5) und die Säulen (6) eine raue Textur haben, während die untere Platte (2) glatt ist.

4. Künstliches Küstenbauelement für die Regenerierung, Wiederherstellung und Sanierung von Meereslebensräumen nach Anspruch 1, **dadurch gekennzeichnet, dass** die Durchgangslöcher für die Gewindestangen (7), die in den Platten (2, 5) vorgesehen sind, röhrenförmige Teile (8) aus PVC sind, die in dem Beton eingebettet sind.

## Revendications

1. PIECE DE CONSTRUCTION DE LITTORAL ARTIFICIEL POUR LA REGENERATION, LA RECUPERATION ET LA REHABILITATION DES HABITATS MARINS, comprenant trois parties bien différenciées: une dalle inférieure (2); une dalle supérieure (5) et une partie intermédiaire définie par des colonnes cylindriques (6) réparties reliant les dalles (2, 5) comme lien d'assemblage entre elles; **caractérisée en ce que**
la dalle inférieure (2) est constituée d'une partie solide inférieure (2) destinée à reposer sur le sol, ayant une forme prismatique hexagonale;
la dalle supérieure (5) a la même forme prismatique hexagonale, mais avec un apothème plus petit et des angles arrondis, avec des ouvertures de passage (4) de section triangulaire et aux angles arrondis, qui sont situées entre des rayons respectifs formant des nervures radiales qui relient le centre aux sommets;
les colonnes (6) sont réparties, joignant les sommets et les points centraux des dalles (2, 5) comme un lien d'assemblage entre elles, la matrice étant verrouillée ensemble à l'aide de tiges filetées séparées (7) noyées dans le matériau de béton des colonnes (6) dans la direction axiale et dont les extrémités émergeantes passent à travers des trous prévus dans les sommets et le point central des dalles hexagonales (2, 5) (coïncidant) avec l'emplacement des rondelles et écrous d'extrémité (9);
les dalles (2, 5) et les colonnes (6) sont fabriquées en béton d'un pH très similaire à celui de l'eau de mer, ayant un pH compris entre 7,5 et 8,4, et pouvant être obtenu par un procédé sélectionné dans le groupe comprenant la carbonatation ou l'introduction dans des chambres d'injection afin d'éliminer le CO2, ou l'utilisation d'additifs spéciaux tels que la microsilice;
le matériau en béton de la dalle supérieure (5) et des colonnes (6) a une texture grossière.

2. PIECE DE CONSTRUCTION DE LITTORAL ARTIFICIEL POUR LA REGENERATION, LA RECUPERATION ET LA REHABILITATION DES HABITATS MARINS, suivant la revendication 1, **caractérisée en ce que** la dalle inférieure (2) a des moyens d'ancrage (3) pour le levage et le transport, matérialisés par des arcs ou des ponts de tiges d'acier dont les extrémités repliées sont noyées dans le matériau en béton de la dalle (2).

3. PIECE DE CONSTRUCTION DE LITTORAL ARTIFICIEL POUR LA REGENERATION, LA RECUPERATION ET LA REHABILITATION DES HABITATS MARINS suivant la revendication 1, **caractérisée en ce que** la dalle supérieure (5) et les colonnes (6) ont une texture grossière alors que la dalle inférieure (2) est lisse.

4. PIECE DE CONSTRUCTION DE LITTORAL ARTIFICIEL POUR LA REGENERATION, LA RECUPERATION ET LA REHABILITATION DES HABITATS MARINS suivant la revendication 1, **caractérisée en ce que** les trous de passage prévus dans les dalles (2, 5) pour les tiges filetées (7) sont des portions tubulaires (8) de PVC noyées dans le béton.
